# EUROPEAN PATENT APPLICATION

(11) **EP 3 319 278 A1**
(43) Date of publication of application: **09.05.2018**
(21) Application number: 16779467.6
(22) Date of filing: 24.02.2016
(51) Int. Cl.: H04L 12/741

(54) **METHOD AND APPARATUS FOR IMPLEMENTING SERVICE FUNCTION CHAIN**

(30) Priority: 02.07.2015 CN 201510383483
(71) Applicant: ZTE Corporation, Shenzhen, Guangdong 518057 (CN)
(72) Inventor: WANG, Cui, Shenzhen Guangdong 518057 (CN); MENG, Wei, Shenzhen Guangdong 518057 (CN); HUANG, Sunliang, Shenzhen Guangdong 518057 (CN)
(74) Representative: Lavoix
(86) International application number: PCT/CN2016/074458
(87) International publication number: WO 2016/165492

(57) **Abstract**

A method and device for implementing a Service Function Chain (SFC) are provided. The method is applied to a node on the SFC, and the method includes that: SFC information is encapsulated in an Internet Protocol version 6 (IPv6) of an IPv6 packet; and the IPv6 packet is sent according to the SFC information. After the IPv6 packet containing the SFC information is received, the SFC information is parsed; and an IPv6 address of a next-hop node of a Service Function Path (SFP) is acquired as a destination address, and the IPv6 packet is sent to the destination address.

## Description

### TECHNICAL FIELD

The disclosure relates to, but is not limited to, the technical field of communications.

### BACKGROUND

The Service Function Chain (SFC) technology integrates all services and virtualizes a service overlay layer to form its own service topology for decoupling from an underlying network and breaking through restrictions of a structure of the underlying network.

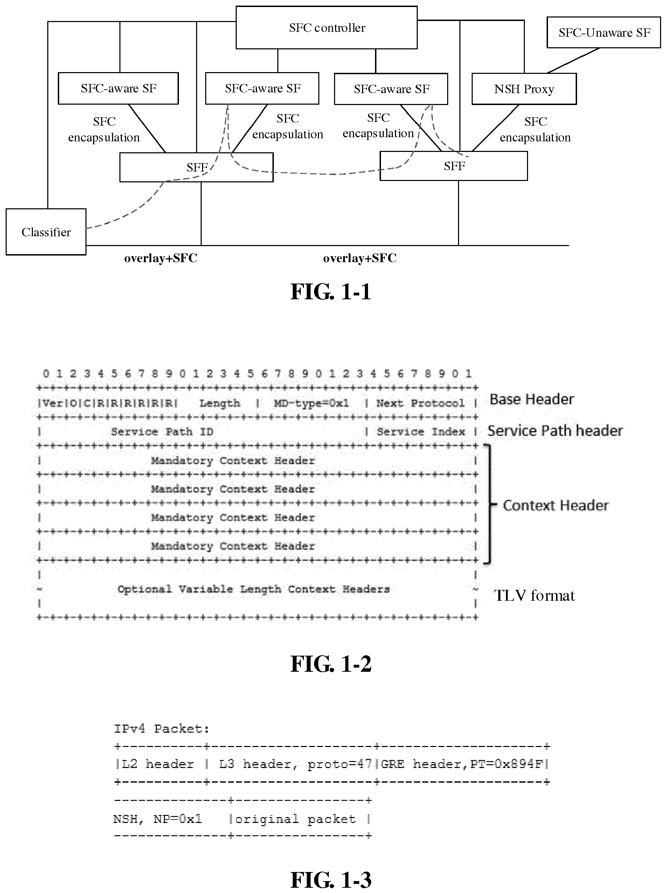

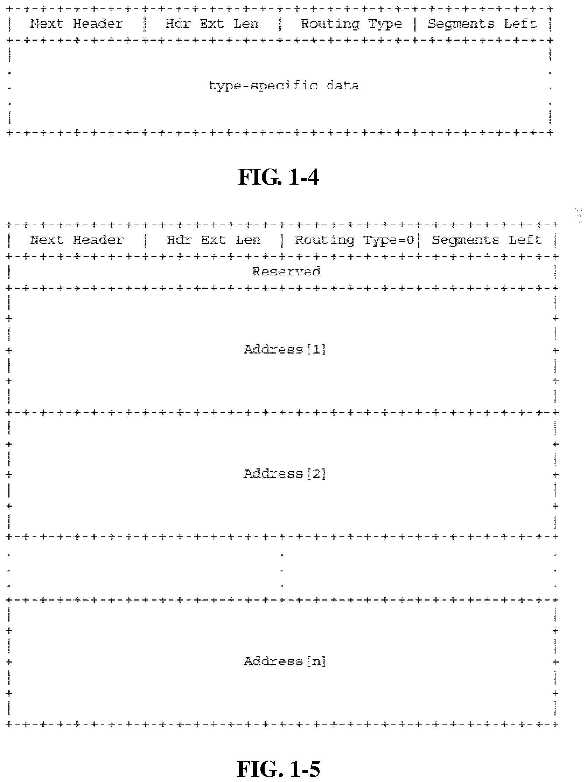

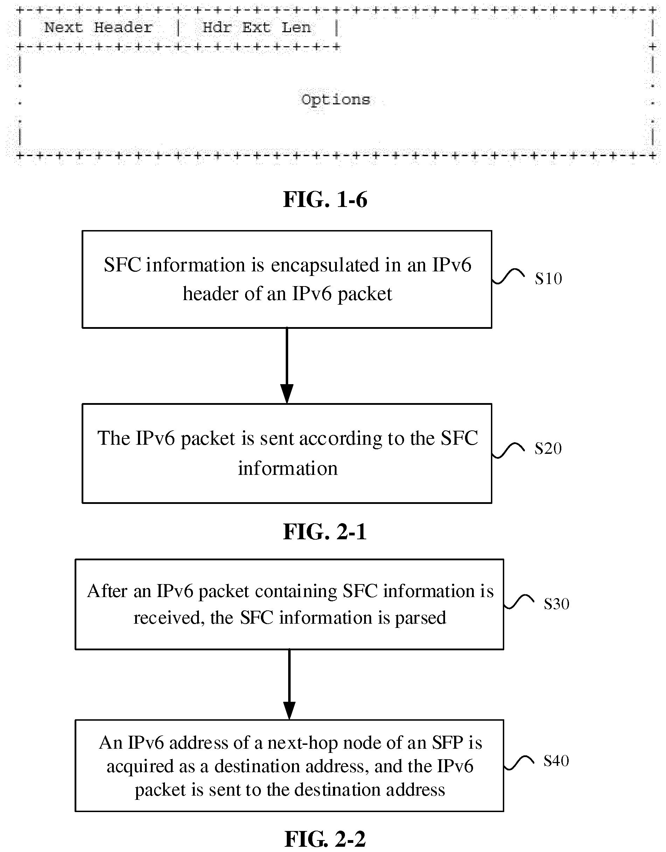

An SFC architecture, as shown in FIG. 1-1, includes the following components: a classifier, a Service Function Forwarder (SFF), a Service Function (SF) and a Network Service Header (NSH) proxy. The classifier is responsible for classifying traffic and performing NSH encapsulation on the traffic according to a result of the classification, that is, a subsequent Service Function Path (SFP) of a packet is determined at the classifier, and then the packet is further encapsulated at a service overlay layer and forwarded to a next-hop SFF through an overlay technology; after receiving the packet, the next-hop SFF decapsulates the service overlay layer, parses the received packet containing an NSH, and forwards the packet to a corresponding SF for processing according to information in the NSH; the SF is responsible for performing corresponding SF processing on the received packet, and after processing, further updating the NSH and forwarding the updated packet to its own SFF; the SFF searches for corresponding transmission layer encapsulation according to the information in the NSH, performs overlay encapsulation on the NSH packet, and forwards the packet to a next-hop SFF; and the NSH proxy mainly interacts with an NSH-unware SF as a representative of the SFF. A dotted line in FIG. 1-1 shows an SFP.

From the perspective of a control plane, an SFC classification rule, an SFC definition and an NSH are issued by an SFC controller or locally configured. From the perspective of data-plane encapsulation, the whole NSH, related to a service, of an SFC, as shown in FIG. 1-2, includes a base header, a service path header and a context header. The base header mainly identifies a version number, a length, a metadata type and a next protocol number; the service path header is a core, and identifies SFP related information of the whole SFC, including a Service Function Path Identifier (SPFID) (a Service Path ID (SPID) or an SPFID) and a service index, where the SFPID (the SPID or the SFPID is an SFPID) may be locally configured, or may be globally issued, and one SFPID corresponds to one respective service forwarding path; a node determines a specific SFC and SF to which a current packet should be forwarded for processing according to the SFPID and the service index; and the context header is arranged to contain context information, and is arranged to share information and transfer the information between a classifier and an SF, between SFs and between an SF and an SFF. For example, after the overlay technology of an Internet Protocol version 4Generic Routing Encapsulation (IPv4GRE) is used, a full packet format sent by a classifier is shown in FIG. 1-3, that is, an outer layer of an original packet is encapsulated with an NSH, an IPv4-GRE header and an Layer-2 (L2) header.

A Segment Routing (SR) technology is also a hot technology currently in the Internet Engineering Task Force (IETF). A main principle is that an ordered Segment Routing List (SR-List) is issued to a head node in an SR domain through a control plane, each piece of segment information identifies a segment a packet is to go through, and the SR-List identifies all the segments the packet is to go through. In such a manner, when the packet arrives at the head node of the SR domain, the packet may subsequently be forwarded according to the SR-List in an SR header only by adding the SR header to the packet. Furthermore, each segment may represent a segment of instructions, or a topology, or a service; and SR supports a segment with a global attribute, and also supports a segment with a local attribute of belonging to a certain node. Segments supported in a current SR technology include: an Interior Gateway Protocol (IGP) Segment Identifier (IGP-SID), a Prefix-SID, a Node-SID, an Anycast SID, an Adjacent SID (Adj-SID), a Border Gateway Protocol (BGP) Peer SID and the like. Existing SR technologies include Multiple Protocol Label Switching (MPLS)-SR, that is, during application in an IPv4 network, each segment is identified with a label, an SR-List is a stack of the labels, and is encapsulated outside an IPv4 packet header, and packet forwarding in an MPLS-SR domain is implemented according to label stack information.

As can be seen from the abovementioned technologies, from the perspective of a data layer, the SFC technology may specify an SFPID that a packet goes through according to a packet classification result, and then encapsulate an outer layer of an original packet with a layer of NSH for further forwarding to a next-hop SFF through an overlay technology, all a classifier(s), SFF(s), SF(s) and the like through which the packet passes have to support the NSH, and even for an SF not supporting the NSH, it needs to add an SSH proxy component for interworking between an SF supporting the NSH and the SF not supporting the NSH. From the perspective of a control layer, a controller is needed to additionally support management and control of an SFC domain. Therefore, deployment difficulties and deployment period of the SFC technology in an existing network are greatly increased, and a function set of the network devices is also greatly increased.

### SUMMARY

The below is a summary about the subject matter described in the disclosure in detail. The summary is not intended to limit the scope of protection of the claims.

The disclosure provides a method and device for implementing an SFC, which may simply deploy and rapidly implement an SFC technology in an Internet Protocol version 6 (IPv6) network.

A method for implementing an SFC may be applied to a node on the SFC, and the method may include that:
SFC information is encapsulated in an IPv6 header of an IPv6 packet; and
the IPv6 packet is sent according to the SFC information.

Alternatively, the method further includes the following characteristics:
the SFC information may include at least one of the following information: service forwarding path information or metadata information.

Alternatively, the method further includes the following characteristics:
the IPv6 header arranged to encapsulate the service forwarding path information may be an IPv6 routing header, or a newly defined IPv6 header.

Alternatively, the method further includes the following characteristics:
the service forwarding path information may include: SFP information and a service index,
wherein the service index may be arranged to identify position information of the current node in an SFP.

Alternatively, the method further includes the following characteristics:
the IPv6 header arranged to encapsulate the metadata information may be an IPv6 destination options header, or a newly defined IPv6 header.

Alternatively, the method further includes the following characteristics:
the operation that the IPv6 packet is sent according to the SFC information may include that:
an IPv6 address of a next-hop node is determined according to the acquired service forwarding path information, the IPv6 address of the next-hop node is determined as a destination address, and the IPv6 packet is sent to the destination address.

Alternatively, the method further includes the following characteristics:
before the operation that the SFC information is encapsulated in the IPv6 header of the IPv6 packet, the method may further include that: traffic is classified; and
the operation that the SFC information is encapsulated in the IPv6 header of the IPv6 packet may include that: the SFC information is encapsulated in the IPv6 header of the IPv6 packet according to a result of classification.

Alternatively, the method further includes the following characteristics:
before the operation that the SFC information is encapsulated in the IPv6 header of the IPv6 packet, the method may further include that: the SFC information is acquired.

Alternatively, the method further includes the following characteristics:
the SFC information may be acquired in at least one of the following manners:
acquiring the SFC information from local configuration information, and acquiring the SFC information from global configuration information issued by a controller.

Alternatively, the method further includes the following characteristics:
the SFP information may include any one of: an SFPID, an address list of nodes on the SFP, an SID list of the nodes on the SFP or a node ID list of the nodes on the SFP.

A method for implementing an SFC may be applied to a node on the SFC, and the method may include that:
after an IPv6 packet containing SFC information is received, the SFC information is parsed; and
an IPv6 address of a next-hop node of an SFP is acquired as a destination address, and the IPv6 packet is sent to the destination address.

Alternatively, the method further includes the following characteristics:
the SFC information may include at least one of the following information: service forwarding path information or metadata information.

Alternatively, the method further includes the following characteristics:
the service forwarding path information may be encapsulated in an IPv6 routing header of the IPv6 packet, or may be encapsulated in a newly defined IPv6 header of the IPv6 packet; and
the metadata information may be encapsulated in an IPv6 destination options header of the IPv6 packet, or may be encapsulated in a newly defined IPv6 header of the IPv6 packet.

Alternatively, the method further includes the following characteristics:
the operation that the IPv6 packet is sent to the destination packet may include that:
when a next hop of the node is a destination node of the SFP, the IPv6 header encapsulated with the SFC information is stripped from the IPv6 packet, and then the IPv6 packet is sent to the destination address.

Alternatively, the method further includes the following characteristics:
the operation that the IPv6 packet is sent to the destination address may include that:
when the next hop of the node is not the destination node of the SFP, whether to update the SFC information contained in the IPv6 packet or not is determined according to a deployment strategy, and then the IPv6 packet is sent to the destination address.

Alternatively, the method further includes the following characteristics:
the operation that whether to update the SFC information contained in the IPv6 packet or not is determined according to the deployment strategy and then the IPv6 packet is sent to the destination address may include that:
when the service forwarding path information contained in the IPv6 packet is updated according to the deployment strategy, the updated service forwarding path information is parsed, the IPv6 address of the next-hop node of the updated SFP is acquired as the destination address, and the IPv6 packet is sent to the destination address.

Alternatively, the method further includes the following characteristics:
the service forwarding path information may include: SFP information and a service index,
wherein the service index may be arranged to identify position information of the current node in the SFP.

Alternatively, the method further includes the following characteristics:
the operation that the IPv6 packet is sent to the destination address may include that:
when the next hop of the node is not the destination node of the SFP and the SFC information includes the service forwarding path information, the service index in the IPv6 packet is updated, and then the IPv6 packet is sent to the destination address.

Alternatively, the method further includes the following characteristics:
the operation that the service index in the IPv6 packet is updated may include that:
when the service index represents information about a hop number between the current node and the destination node of the SFP, the service index in the IPv6 packet is progressively decreased.

A device for implementing an SFC may be applied to a node on the SFC, and may include:
an encapsulation module, arranged to encapsulate SFC information in an IPv6 header of an IPv6 packet; and
a sending module, arranged to send the IPv6 packet according to the SFC information.

Alternatively, the device further includes the following characteristics:
the SFC information may include at least one of the following information: service forwarding path information and metadata information.

Alternatively, the device further includes the following characteristics:
the IPv6 header arranged to encapsulate the service forwarding path information may be an IPv6 routing header, or a newly defined IPv6 header.

Alternatively, the device further includes the following characteristics:
the service forwarding path information may include: SFP information and a service index,
wherein the service index may be arranged to identify position information of the current node in an SFP.

Alternatively, the device further includes the following characteristics:
the IPv6 header arranged to encapsulate the metadata information may be an IPv6 destination options header, or a newly defined IPv6 header.

Alternatively, the device further includes the following characteristics:
the sending module may be arranged to:
determine an IPv6 address of a next-hop node according to the acquired service forwarding path information, determine the IPv6 address of the next-hop node as a destination address, and send the IPv6 packet to the destination address.

Alternatively, the device further includes the following characteristics:
the encapsulation module may further be arranged to:
classify traffic, and encapsulate the SFC information in the IPv6 header of the IPv6 packet according to a result of the classification.

Alternatively, the device further includes the following characteristics:
the device may further include:
an information acquisition module, arranged to acquire the SFC information.

Alternatively, the device further includes the following characteristics:
the information acquisition module may be arranged to acquire the SFC information in at least one of the following manners:
acquiring the SFC information from local configuration information, and acquiring the SFC information from global configuration information issued by a controller.

Alternatively, the device further includes the following characteristics:
the SFC information may include any one of: an SFPID, an address list of nodes on the SFP, an SID list of the nodes on the SFP and a node ID list of the nodes on the SFP.

A device for implementing an SFC may be applied to a node on the SFC, and may include:
a packet receiving module, arranged to, after an IPv6 packet containing SFC information is received, parse the SFC information; and
a packet sending module, arranged to acquire an IPv6 address of a next-hop node of an SFP as a destination address, and send the IPv6 packet to the destination address.

Alternatively, the device further includes the following characteristics:
the SFC information may include at least one of the following information: service forwarding path information and metadata information.

Alternatively, the device further includes the following characteristics:
the service forwarding path information may be encapsulated in an IPv6 routing header of the IPv6 packet, or may be encapsulated in a newly defined IPv6 header of the IPv6 packet; and
the metadata information may be encapsulated in an IPv6 destination options header of the IPv6 packet, or may be encapsulated in a newly defined IPv6 header of the IPv6 packet.

Alternatively, the device further includes the following characteristics:
the packet sending module may be arranged to:
when a next hop of the node is a destination node of the SFP, strip the IPv6 header encapsulated with the SFC information from the IPv6 packet, and then send the IPv6 packet to the destination address.

Alternatively, the device further includes the following characteristics:
the packet sending module may be arranged to:
when the next hop of the node is not the destination node of the SFP, determine whether to update the SFC information contained in the IPv6 packet or not according to a deployment strategy, and then send the IPv6 packet to the destination address.

Alternatively, the device further includes the following characteristics:
the packet sending module may be arranged to:
when the service forwarding path information contained in the IPv6 packet is updated according to the deployment strategy, parse the updated service forwarding path information, acquire the IPv6 address of the next-hop node of the updated SFP as the destination address, and send the IPv6 packet to the destination address.

Alternatively, the device further includes the following characteristics:
the service forwarding path information may include: SFP information and a service index,
wherein the service index may be arranged to identify position information of the current node in the SFP.

Alternatively, the device further includes the following characteristics:
the packet sending module may be arranged to:
when the next hop of the node is not the destination node of the SFP and the SFC information includes the service forwarding path information, update the service index in the IPv6 packet, and then send the IPv6 packet to the destination address.

Alternatively, the device further includes the following characteristics:
the packet sending module may be arranged to:
when the service index represents information about a hop number between the current node and the destination node of the SFP, progressively decrease the service index in the IPv6 packet.

A computer-readable storage medium may store computer executable instructions, and the computer executable instructions may be arranged to execute any abovementioned method.

Compared with the related art, the method and device provided by embodiments of the disclosure for implementing the SFC have the advantage that the SFC information is encapsulated in the IPv6 header of the IPv6 packet and the IPv6 packet is forwarded along the SFC, so that the SFC technology may be simply deployed and rapidly implemented in an IPv6 network.

After the drawings and detailed descriptions are read and understood, the other aspects may be comprehended.

### BRIEF DESCRIPTION OF DRAWINGS

FIG. 1-1 is an architecture of an SFC technology in the related art.
FIG. 1-2 is an NSH encapsulated on a data plane according to the SFC technology in the related art.
FIG. 1-3 is a complete packet structure sent from a classifier component according to the SFC technology in the related art.
FIG. 1-4 is a structure of an IPv6 routing header packet in the related art.
FIG. 1-5 is a structure of an IPv6 routing header packet with a Routing Type=0 in the related art.
FIG. 1-6 is a format of an IPv6 destination option header packet.
FIG. 2-1 is a flowchart of a method for implementing an SFC according to an embodiment of the disclosure.
FIG. 2-2 is a flowchart of another method for implementing an SFC according to an embodiment of the disclosure.

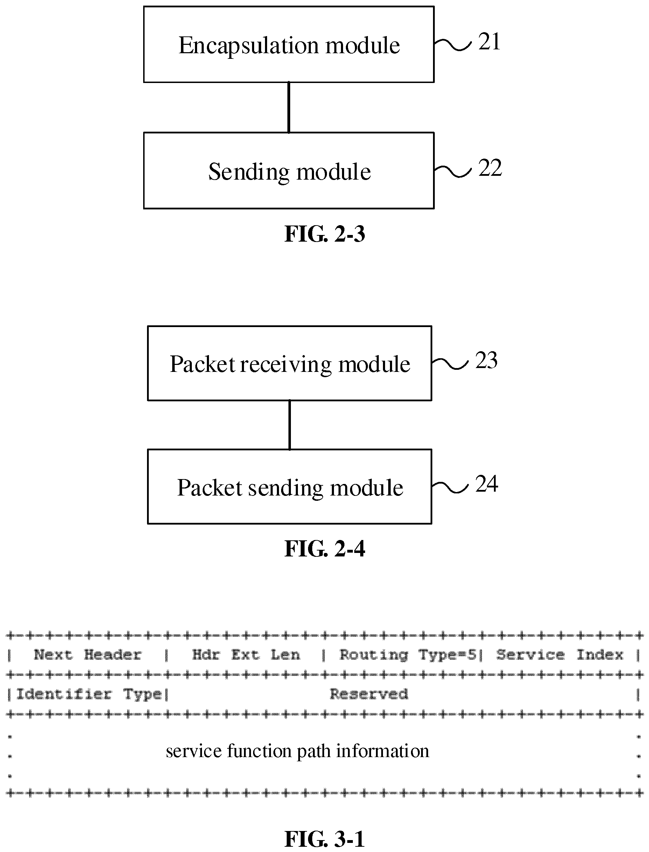

FIG. 2-3 is a structure diagram of a device for implementing an SFC according to an embodiment of the disclosure.
FIG. 2-4 is a structure diagram of another device for implementing an SFC according to an embodiment of the disclosure.

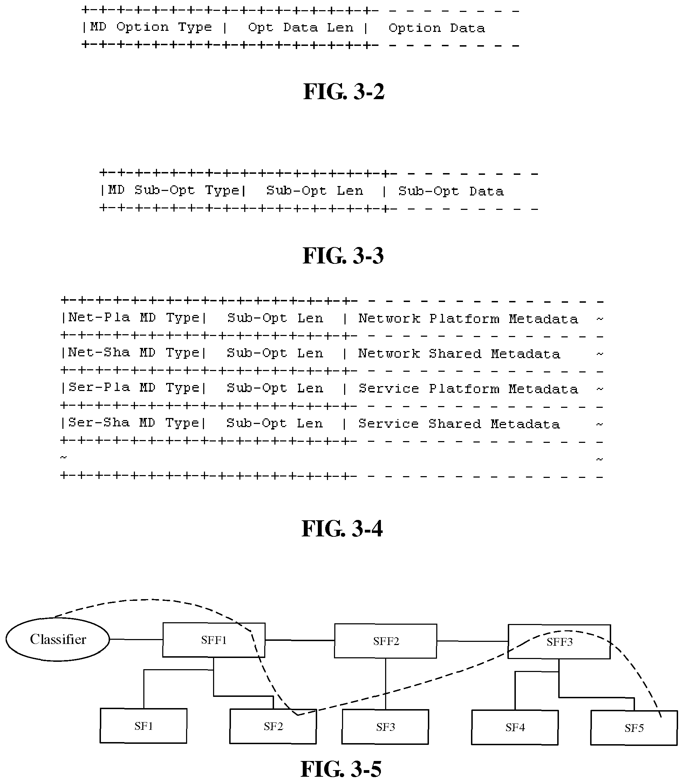

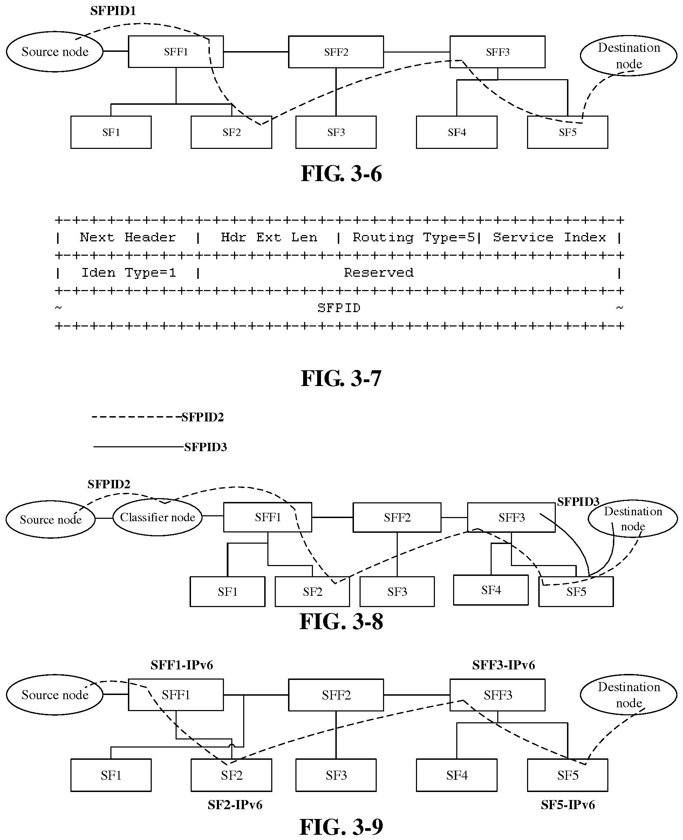

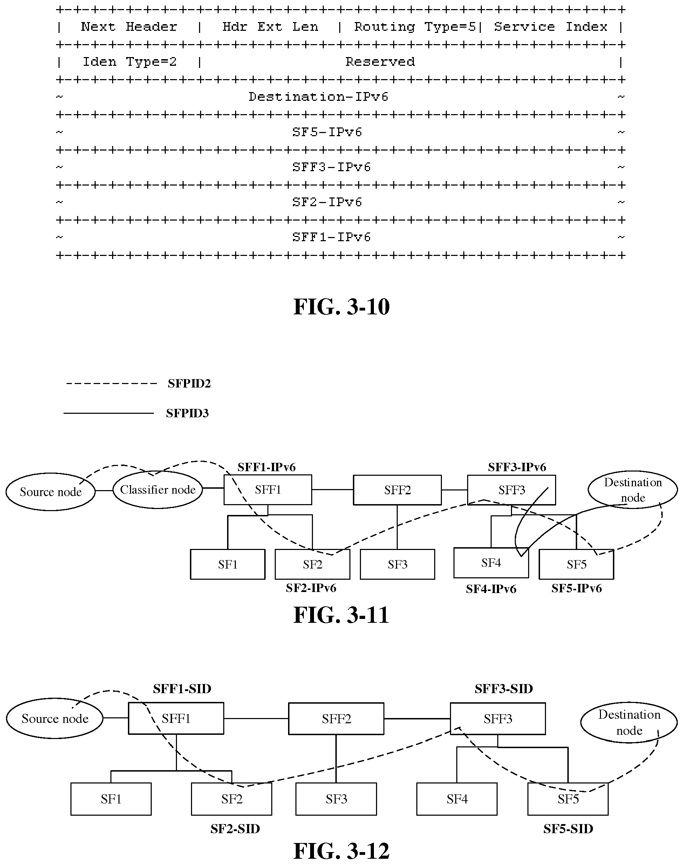

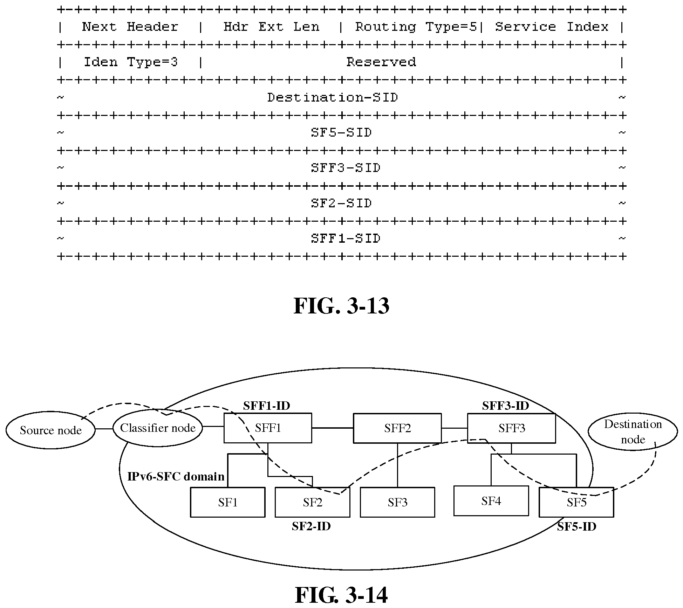

FIG. 3-1 is a reference structure of a packet of which an IPv6 routing header contains SFP related information according to an embodiment of the disclosure.
FIG. 3-2 is a reference format of a packet of which an IPv6 destination options header contains a metadata option according to an embodiment of the disclosure.
FIG. 3-3 is a reference format of a metadata sub-option packet extended in a metadata option packet according to an embodiment of the disclosure.
FIG. 3-4 shows multiple types of metadata sub-options defined with a reference according to an embodiment of the disclosure.
FIG. 3-5 is an SFC to be implemented according to an embodiment of the disclosure.
FIG. 3-6 is a schematic diagram of an IPv6 SFC according to example one of the disclosure.
FIG. 3-7 is a reference format of an IPv6 routing header implemented by transmitting SFP related information through an SFPID according to an embodiment of the disclosure.
FIG. 3-8 is a schematic diagram of an IPv6 SFC according to example two of the disclosure (an SFP changes).
FIG. 3-9 is a schematic diagram of an IPv6 SFC according to example three of the disclosure.
FIG. 3-10 is a reference format of an IPv6 routing header implemented by transmitting SFP related information through an IPv6 global address list according to an embodiment of the disclosure.
FIG. 3-11 is a schematic diagram of an IPv6 SFC according to example four of the disclosure (a service forwarding path is updated at an intermediate node).
FIG. 3-12 is a schematic diagram of an IPv6 SFC according to example five of the disclosure.
FIG. 3-13 is a reference format of an IPv6 routing header implemented by transmitting SFP related information through SR according to an embodiment of the disclosure.
FIG. 3-14 is a schematic diagram of an IPv6 SFC according to example six of the disclosure.

### DETAILED DESCRIPTION

The embodiments of the disclosure will be described below in combination with the drawings in detail. It is to be noted that the embodiments in the disclosure and features in the embodiments may be freely combined without conflicts.

At present, in an IPv6 technology (RFC2460), multiple headers are defined for IPv6 headers, including a hop-by-hop options header, a routing header, a fragment header, a destination options header, an authentication header and the like.

Herein, the routing header is mainly arranged to display, at an IPv6 source node, information of intermediate nodes to be went through in a process for a specified packet to arrive at a destination node, and its format is shown in FIG. 1-4. Next Header refers to a protocol number of a next header, Routing Type refers to a type of the current routing header, and Segments Left (left nodes) identifies a number of nodes to be went through for arrival at a destination from the current node; and type-specific data (data corresponding to the current type) identifies data information corresponding to the type of the current routing header. In RFC2460, extension of a packet with a Routing Type of 0 is defined, and its format is shown in FIG. 1-5. Address[1] to Address[n] identify IPv6 address information of intermediate nodes to be went through for arrival at the destination.

Herein, the destination options header is mainly arranged to contain information to be processed by the destination node. An example of a header format is shown in FIG. 1-6, where an Options field includes options in a Type-Length-Value (TLV) format.

The embodiments of the disclosure are based on the IPv6 network, and are intended to extend an IPv6 header supported by all IPv6 network nodes by virtue of a principle of the IPv6 headers, to implement simple deployment and implementation of the SFC technology.

As shown in FIG. 2-1, an embodiment of the disclosure provides a method for implementing an SFC, which is applied to a node on the SFC. The method includes the following steps.

In S10, SFC information is encapsulated in an IPv6 header of an IPv6 packet.

In S20, the IPv6 packet is sent according to the SFC information.

The method may further include the following characteristics.

Alternatively, before the operation that the SFC information is encapsulated in the IPv6 header of the IPv6 packet, the method may further include that:
the SFC information is acquired.

Alternatively, the SFC information may be acquired in at least one of the following manners: acquiring the SFC information from local configuration information, or acquiring the SFC information from global configuration information issued by a controller.

Alternatively, the SFC information may include at least one of the following information: service forwarding path information or metadata information.

Alternatively, the service forwarding path information may include: SFP information and a service index.

Alternatively, the SFP information may include any one of: an SFPID, an address list of nodes on an SFP, an SID list of the nodes on the SFP or a node ID list of the nodes on the SFP.

The service index is arranged to identify position information of the current node in the SFP.

The SFPID is arranged to uniquely identify the SFP.

Alternatively, before the operation that the SFC information is encapsulated in the IPv6 header of the IPv6 packet, the method may further include that: traffic is classified.

Accordingly, the operation that the SFC information is encapsulated in the IPv6 header of the IPv6 packet may include that: the SFC information is encapsulated in the IPv6 header of the IPv6 packet according to a result of the classification.

Alternatively, the operation that the IPv6 packet is sent according to the SFC information may include that:
an IPv6 address of a next-hop node is determined according to the acquired service forwarding path information, the IPv6 address of the next-hop node is determined as a destination address, and the IPv6 packet is sent to the destination address.

Alternatively, the IPv6 header arranged to encapsulate the service forwarding path information may be an IPv6 routing header, or a newly defined IPv6 header.

The metadata information may include at least one of the following information: mandatory context data information or optional context data information.

The mandatory context data information includes the following one or more types of data: network platform metadata, network service metadata, service platform metadata or service shared metadata.

The network platform metadata is arranged to identify network platform-level context information shared between network nodes, for example, incoming interface information and a forwarding environment. The network service metadata is arranged to identify network-layer information shared between the network nodes, for example, an ID, tenant information and the classification result. The service platform metadata is arranged to identify service platform-level context information shared between SF nodes, for example, a service strategy. The service shared metadata is arranged to identify service related context information shared between the SF nodes, for example, application information and a service processing result.

The optional context data information may be different according to different practical service scenarios.

Alternatively, the IPv6 header arranged to encapsulate the metadata information may be an IPv6 destination options header, or a newly defined IPv6 header.

As shown in FIG. 2-2, an embodiment of the disclosure provides a method for implementing an SFC, which is applied to a node on the SFC. The method includes the following steps.

In S30, after an IPv6 packet containing SFC information is received, the SFC information is parsed.

In S40, an IPv6 address of a next-hop node of an SFP is acquired as a destination address, and the IPv6 packet is sent to the destination address.

The method may further include the following characteristics:
Nodes on the SFP include at least one of: an SF node(s) or an SFF node(s).

Alternatively, the SFC information may include at least one of the following information: service forwarding path information or metadata information.

Alternatively, the service forwarding path information may include: SFP information and a service index.

Alternatively, the SFP information may include any one of: an SFPID, an address list of the nodes on the SFP, an SID list of the nodes on the SFP or a node ID list of the nodes on the SFP.

The service index is arranged to identify position information of the current node in the SFP.

Alternatively, the service forwarding path information is encapsulated in an IPv6 routing header of the IPv6 packet, or is encapsulated in a newly defined IPv6 header of the IPv6 packet.

The metadata information is encapsulated in an IPv6 destination options header of the IPv6 packet, or is encapsulated in a newly defined IPv6 header of the IPv6 packet.

Alternatively, the operation that the IPv6 packet is sent to the destination packet may include that:
when a next hop of the node is a destination node of the SFP, the IPv6 header encapsulated with the SFC information is stripped from the IPv6 packet, and then the IPv6 packet is sent to the destination address.

Alternatively, the operation that the IPv6 packet is sent to the destination address may include that:
when the next hop of the node is not the destination node of the SFP and the SFC information includes the service forwarding path information, the service index in the IPv6 packet is updated, and then the IPv6 packet is sent to the destination address.

Alternatively, the operation that the service index in the IPv6 packet is updated may include that:
when the service index represents information about a number of hops between the current node and the destination node of the SFP, the service index in the IPv6 packet is progressively decreased.

Alternatively, the operation that the IPv6 packet is sent to the destination address may include that:
when the next hop of the node is not the destination node of the SFP, whether to update the SFC information contained in the IPv6 packet or not is determined according to a deployment strategy, and then the IPv6 packet is sent to the destination address.

Alternatively, the operation that whether to update the SFC information contained in the IPv6 packet or not is determined according to the deployment strategy and then the IPv6 packet is sent to the destination address may include that:
when the service forwarding path information contained in the IPv6 packet is updated according to the deployment strategy, the updated service forwarding path information is parsed, the IPv6 address of the next-hop node of the updated SFP is acquired as the destination address, and the IPv6 packet is sent to the destination address.

As shown in FIG. 2-3, an embodiment of the disclosure provides a device for implementing an SFC, which is applied to a node on the SFC and includes an encapsulation module 21 and a sending module 22.

The encapsulation module 21 is arranged to encapsulate SFC information in an IPv6 header of an IPv6 packet.

The sending module 22 is arranged to send the IPv6 packet according to the SFC information.

The device may further include the following characteristics.

Alternatively, the SFC information may include at least one of the following information: service forwarding path information or metadata information.

Alternatively, the IPv6 header arranged to encapsulate the service forwarding path information may be an IPv6 routing header, or a newly defined IPv6 header.

Alternatively, the service forwarding path information may include: SFP information and a service index.

Here, the service index is arranged to identify position information of the current node in an SFP.

Alternatively, the IPv6 header arranged to encapsulate the metadata information may be an IPv6 destination options header, or a newly defined IPv6 header.

Alternatively, the sending module 22 may be arranged to:
determine an IPv6 address of a next-hop node according to the acquired service forwarding path information, determine the IPv6 address of the next-hop node as a destination address, and send the IPv6 packet to the destination address.

Alternatively, the encapsulation module 21 may be further arranged to:
classify traffic, and encapsulate the SFC information in the IPv6 header of the IPv6 packet according to a result of the classification.

Alternatively, the device may further include an information acquisition module.

The information acquisition module may be arranged to acquire the SFC information.

Alternatively, the information acquisition module may be arranged to acquire the SFC information in at least one of the following manners:
acquiring the SFC information from local configuration information, and acquiring the SFC information from global configuration information issued by a controller.

Alternatively, the SFC information includes any one of: an SFPID, an address list of nodes on the SFP, an SID list of the nodes on the SFP or a node ID list of the nodes on the SFP.

Alternatively, the metadata information includes at least one of the following information: mandatory context data information or optional context data information.

As shown in FIG. 2-4, an embodiment of the disclosure provides a device for implementing an SFC, which is applied to a node on the SFC and includes a packet receiving module 23 and a packet sending module 24.

The packet receiving module 23 is arranged to, after an IPv6 packet containing SFC information is received, parse the SFC information.

The packet sending module 24 is arranged to acquire an IPv6 address of a next-hop node of an SFP as a destination address, and send the IPv6 packet to the destination address.

The device may further include the following characteristics.

Alternatively, the SFC information may include at least one of the following information: service forwarding path information or metadata information.

Alternatively, the service forwarding path information may be encapsulated in an IPv6 routing header of the IPv6 packet, or may be encapsulated in a newly defined IPv6 header of the IPv6 packet.

The metadata information may be encapsulated in an IPv6 destination options header of the IPv6 packet, or may be encapsulated in a newly defined IPv6 header of the IPv6 packet.

Alternatively, the packet sending module 24 may be arranged to, when a next hop of the current node is a destination node of the SFP, strip the IPv6 header encapsulated with the SFC information from the IPv6 packet, and then send the IPv6 packet to the destination address.

Alternatively, the packet sending module 24 may be arranged to, when the next hop of the node is not the destination node of the SFP, determine whether to update the SFC information contained in the IPv6 packet or not according to a deployment strategy, and then send the IPv6 packet to the destination address.

Alternatively, the packet sending module 24 may be arranged to, when the service forwarding path information contained in the IPv6 packet is updated according to the deployment strategy, parse the updated service forwarding path information, acquire the IPv6 address of the next-hop node of the updated SFP as the destination address, and send the IPv6 packet to the destination address.

Alternatively, the service forwarding path information includes: SFP information and a service index,
wherein the service index is arranged to identify position information of the current node in the SFP.

Alternatively, the packet sending module 24 may be arranged to, when the next hop of the node is not the destination node of the SFP and the SFC information includes the service forwarding path information, update the service index in the IPv6 packet, and then send the IPv6 packet to the destination address.

Alternatively, the packet sending module 24 may be arranged to, when the service index represents information of a number of hops between the current node and the destination node of the SFP, progressively decrease the service index in the IPv6 packet.

### Implementations

As shown in FIG. 3-1, an embodiment of the disclosure extends a reference format of a packet of which an IPv6 routing header contains SFP related information, which includes:
Routing Type: routing header type;
here, a routing header of a type 5 is extended in the embodiment of the disclosure;
Service Index: a service index, which is identical to Segments Left;
Identifier Type: mode for identifying service forwarding path information,
here, the identification manner for the service forwarding path information may be an SFPID, or may be an address list of each node, and
SFP information: being arranged to identify experienced path information for service forwarding.

As shown in FIG. 3-2, an embodiment of the disclosure newly defines a metadata option to contain metadata related information on the basis of extension of an IPv6 destination options header containing the metadata related information.

Here, the metadata option is arranged to identify a context header and/or variable length optional metadata information contained in an NSH in a current SFC technology, and a reference format of the metadata option is shown in FIG. 3-2, which includes:
MD Option Type: identifying a metadata option type;
Opt Data Len: identifying a metadata length contained in the metadata option; and
Option Data: identifying metadata contained in the option.

Furthermore, a definition about an MD Sub-Opt is extended in the metadata option, and a reference format of the sub-option is shown in FIG. 3-3, which includes:
MD Sub-Opt Type: identifying a metadata sub-option type;
MD Sub-Opt Length: identifying a metadata length contained in the metadata sub-option; and
Sub-Opt Data: identifying metadata contained in the metadata sub-option.

Furthermore, the currently defined metadata sub-option, as shown in FIG. 3-4, includes, but not limited to:
a network platform metadata sub-option: identifying network platform-level context information shared between network nodes, for example, incoming interface information and a forwarding environment;
a network service metadata sub-option: identifying network-layer information shared between the network nodes, for example, an ID, tenant information and a classification result;
a service platform metadata sub-option: identifying service platform-level context information shared between SF nodes, for example, a service strategy;
a service shared metadata sub-option: identifying service related context information shared between the SF nodes, for example, application information and a service processing result; and
other related metadata.

As shown in FIG. 3-5, a service forwarding path went through by the SFC is represented as: SFF1->SF2->SFF3->SF5,
where SF1 and SF2 are connected to SFF1, SF3 is connected to SFF2, SF4 and SF5 are connected to SFF3, and a classifier and each SFF and SF belong to nodes in an IPv6-SFC domain.

### Example 1

As shown in FIG. 3-6, a packet goes through intermediate nodes SFF1/SF2/SFF3/SF5 when being sent from a source node S (Source) to a destination D (Destination), and a forwarding flow of the packet is as follows.

In Step 1, the source node Source acquires information [SFF1,SF2,SFF3,SF5,Destination] about a service forwarding path to the destination node Destination and a corresponding SFPID SFPID1, totally 5 hops (Service Index), and meanwhile, acquires metadata related information to be transmitted and shared on the service forwarding path, where the path information and the metadata related information may be locally configured, or may be acquired from a controller, and here, the source node plays a role in encapsulating service forwarding path related information and the metadata related information.

In Step 2, the source node parses the SFPID1, acquires information of a first-hop node, further parses it as a routable IPv6 address, encapsulates it in a destination address field of an IPv6 header, encapsulates the SFPID 1 corresponding to the information [SFF1,SF2,SFF3,SF5,Destination] about the service forwarding path in a routing header defined in the embodiment of the disclosure, that is, a packet format is shown in FIG. 3-7, 1 is subtracted from the Service Index field to obtain 4, and meanwhile, the acquired metadata related information is encapsulated in an IPv6 destination options header.

In Step 3, the source node performs forwarding to the first-hop node SFF1 according to a destination IPv6 address in the IPv6 header. Of course, when looking up an IPv6 routing forwarding table, the source node may find that tunnel encapsulation or MPLS forwarding is required for arrival at the destination IPv6 address, or may find that Virtual Local Area Network (VLAN) encapsulation, Virtual Extensible Local Area Network (VXLAN) encapsulation, tunnel encapsulation or MPLS forwarding is required for arrival at the destination IPv6 address.

In Step 4, after SFF1 receives the packet, if finding that the destination is itself, the SFF1 parses the routing header in the packet, further parses the information of the SFPID1 and the Service Index to learn about that the current node is a first hop, further acquires information of a second-hop node SF2, parses the information of SF2 as a routable IPv6 address on the SFF1, replaces the destination address in the IPv6 header with the address, and subtracts 1 from the Service Index field to obtain 3; meanwhile, the metadata related information in the packet is parsed to judge whether there is metadata information needed by the node SFF1 or not, and if YES, the metadata information is read and used, and after use, the metadata information is updated as needed; if NO, the metadata information is not updated; the SFF1 looks up the IPv6 routing table for forwarding according to the updated destination IPv6 address; and it may also be found that VLAN encapsulation, VXLAN encapsulation, tunnel encapsulation or MPLS forwarding is required for arrival at the destination node.

In Step 5, after SF2 receives the packet, if finding that the destination is itself, the SF2 parses the routing header in the packet, further parses the information of the SFPID1 and the Service Index to learn about that the current node is a second hop, further acquires information of a third-hop node SFF3, parses the information of SFF3 as a routable IPv6 address, replaces the destination address in the IPv6 header with the address, and subtracts 1 from the Service Index field to obtain 2; meanwhile, the metadata information in the packet is parsed to judge whether there is metadata information needed by the node SF2 or not; if YES, the metadata information is read and used, and after use, the metadata information is updated as needed; if NO, the metadata information is not updated; the SF2 looks up the IPv6 routing table for forwarding according to the updated destination IPv6 address; and it may also be found that VLAN encapsulation, VXLAN encapsulation, tunnel encapsulation or MPLS forwarding is required for arrival at the destination IPv6 address.

In Step 6, after SFF3 receives the packet, if finding that the destination is itself, the SFF3 parses the routing header in the packet, further parses the information of the SFPID1 and the Service Index to learn about that the current node is a third hop, further acquires information of a fourth-hop node SF5, parses the information of SF5 as a routable IPv6 address on the SFF3, replaces the destination address in the IPv6 header with the address, and subtracts 1 from the Service Index field to obtain 1; meanwhile, the metadata information in the packet is parsed to judge whether there is metadata information needed by the node SFF3 or not; if YES, the metadata information is read and used, and after use, the metadata information is updated as needed; if NO, the metadata information is not updated; the SFF3 looks up the IPv6 routing table for forwarding according to the updated destination IPv6 address; and it may also be found that VLAN encapsulation, VXLAN encapsulation, tunnel encapsulation or MPLS forwarding is required for arrival at the destination address.

In Step 7, after SF5 receives the packet, if finding that the destination is itself, the SF5 parses the routing header in the packet, further parses the information of the SFPID1 and the Service Index to learn about that the current node is a fourth hop, further acquires information of a fifth-hop node Destination, parses information of the Destination as a routable IPv6 address, replaces the destination address in the IPv6 header with the address, and subtracts 1 from the Service Index field to obtain 0; meanwhile, the metadata information in the packet is parsed to judge whether there is metadata information needed by the node SF5 or not; if YES, the metadata information is read and used, and after use, the metadata information is updated as needed; if NO, the metadata information is not updated; the SF5 finds that the Service Index field is 0, and strips the routing header containing the SFP related information and the destination routing header containing the metadata related information; then, the SF5 looks up the IPv6 routing table for forwarding according to the destination Destination-IPv6 address; and it may also be found that VLAN encapsulation, VXLAN encapsulation, tunnel encapsulation or MPLS forwarding is required for arrival at the destination IPv6 address.

### Example 2

As shown in FIG. 3-8, a packet goes through intermediate nodes classifier/SFF1/SF2/SFF3/SF5 when being sent from a source node S (Source) to a destination D (Destination). The classifier is an inevitable node for the source node S to access the destination node D, or is a first-hop routing forwarding device; at this moment, the node performing SFP related information encapsulation and/or metadata related information encapsulation is the intermediate node classifier; and moreover, when the packet arrives at the SFF3, reclassification may occur to reacquire the SFP information and/or the metadata related information. A forwarding flow of the packet is as follows.

In Step 1, the source node Source looks up an IPv6 routing table according to a destination address Destination, and finally forwards the packet to the inevitable node classifier.

In Step 2, the node classifier acquires information [SFF1, SF2, SFF3, SF5, Destination] about a service forwarding path to the destination node Destination and corresponding identifiers SFPID2, totally 5 hops, and meanwhile, does not acquire the metadata related information to be transmitted and shared on the service forwarding path; the path information may be locally configured, or may be acquired from a controller, and here, the node classifier plays a role in encapsulating the SFP related information.

In Step 3, the node classifier parses the SFPID2, acquires information of a first-hop node, further parses the information of the first-hop node as a routable IPv6 address, encapsulates it in a destination address field of an IPv6 header, encapsulates the SFPID2 corresponding to the information [SFF1, SF2, SFF3, SF5, Destination] about the service forwarding path in a routing header defined in the embodiment of the disclosure, and subtracts 1 from the Service Index field to obtain 4.

In Step 4, the node classifier performs forwarding to to the first-hop node SFF1 according to a destination IPv6 address in the IPv6 header. Of course, when looking up an IPv6 routing forwarding table, the node classifier may find that tunnel encapsulation or MPLS forwarding is needed for arrival at the destination IPv6 address, or may find that VLAN encapsulation, VXLAN encapsulation, tunnel encapsulation or MPLS forwarding is required for arrival at the destination IPv6 address.

In Step 5, after SFF1 receives the packet, if finding that the destination is itself, the SFF1 parses the routing header in the packet, further parses the information of the SFPID2 and the Service Index to learn about that the current node is a first hop, further acquires information of a second-hop node SF2, parses the information of SF2 as a routable IPv6 address on the SFF1, replaces the destination address in the IPv6 header with the address, and subtracts 1 from the Service Index field to obtain 3; meanwhile, the other part of the IPv6 header is parsed, and no metadata related information is parsed; the SFF1 looks up the IPv6 routing table for forwarding according to the parsed IPv6 address; and it may also be found that VLAN encapsulation, VXLAN encapsulation, tunnel encapsulation or MPLS forwarding is required for arrival at the SF2.

In Step 6, after SF2 receives the packet, if finding that the destination is itself, the SF2 parses the routing header in the packet, further parses the information of the SFPID2 and the Service Index to learn about that the current node is a second hop, further acquires information of a third-hop node SFF3, parses the information of SFF3 as a routable IPv6 address, replaces the destination address in the IPv6 header with the address, and subtracts 1 from the Service Index field to obtain 2; meanwhile, the other part of the IPv6 header is parsed, and no metadata related information is parsed; the SF2 looks up the IPv6 routing table for forwarding according to the parsed IPv6 address; and it may also be found that VLAN encapsulation, VXLAN encapsulation, tunnel encapsulation or MPLS forwarding is required for arrival at the destination IPv6 address.

In Step 7, after SFF3 receives the packet, if finding that the destination is itself and meanwhile, finding that reclassification is required on the SFF3, the SFF3 reacquires information [SF4, Destination] about a service forwarding path to the destination node Destination and corresponding identifiers SFPID3, totally 2 hops; meanwhile, the metadata related information to be transmitted and shared on the forwarding path is acquired; the path information and the metadata related information may be locally configured, or may be acquired from the controller; here, the node SFF3 forwards the path related information SFPID3 and a service index 2 according to the new service forwarding path, parses information about the first-hop node SF4 as a routable IPv6 address on the SFF3, replaces the destination in the IPv6 header with the address, and subtracts 1 from the Service Index field to obtain 1; in addition, the original service forwarding path related information contained in the routing header is updated with the new service forwarding path related information, and the metadata related information is encapsulated in an IPv6 destination options headers; the SFF3 looks up the IPv6 routing table for forwarding according to the parsed IPv6 address; and it may also be found that VLAN encapsulation, VXLAN encapsulation, tunnel encapsulation or MPLS forwarding is required for arrival at the SF4.

In Step 8, after SF4 receives the packet, if finding that the destination is itself, the SF4 parses the routing header in the packet, further parses the information of the SFPID3 and the Service Index to learn about that the current node is a first hop, further acquires information of a second-hop node Destination, parses the information of the Destination as a routable IPv6 address, replaces the destination address in the IPv6 header with the address, and subtracts 1 from the Service Index field to obtain 0; meanwhile, the metadata information in the packet is parsed to judge whether there is metadata information needed by the node SF4 or not; if YES, the metadata information is read and used, and after use, the metadata information is updated as needed; if NO, the metadata information is not updated; the SF4 finds that the Service Index field is 0, and strips the routing header containing the SFP related information and the destination routing header containing the metadata related information; then, the SF4 looks up the IPv6 routing table for forwarding according to the destination Destination-IPv6 address; and it may also be found that VLAN encapsulation, VXLAN encapsulation, tunnel encapsulation or MPLS forwarding is required for arrival at the destination IPv6 address.

### Example 3

As shown in FIG. 3-9, a packet goes through intermediate nodes SFF1/SF2/SFF3/SF5 when being sent from a source S to a destination D, all the intermediate nodes have globally reachable IPv6 address IDs, and correspond to IPv6 addresses SFF1-IPv6/SF2-IPv6/SFF3-IPv6/SF5-IPv6 respectively, and a forwarding flow of the packet is as follows.

In Step 1, the source node Source acquires information [SFF1, SF2, SFF3, SF5, Destination] about a service forwarding path to the destination node Destination and the corresponding global IPv6 addresses, totally 5 hops, and meanwhile, acquires metadata related information to be transmitted and shared on the service forwarding path. The path information and the metadata related information may be locally configured, or may be acquired from a controller.

In Step 2, the source node acquires IPv6 address information of a first-hop node SFF1, encapsulates it in a destination address field of an IPv6 header, encapsulates the IPv6 addresses corresponding to the information [SFF1, SF2, SFF3, SF5, Destination] about the service forwarding path in a newly extended routing header defined in the embodiment of the disclosure in an inverted sequence, that is, a packet format is shown in FIG. 3-10, subtracts 1 from the Service Index field to obtain 4, and meanwhile, encapsulates the acquired metadata related information in an IPv6 destination options header.

In Step 3, the source node performs forwarding to implement forwarding to the first-hop node SFF1 according to a destination IPv6 address in the IPv6 header. Of course, when looking up an IPv6 routing forwarding table, the source node may find that tunnel encapsulation or MPLS forwarding is required for arrival at the destination IPv6 address.

In Step 4, after SFF1 receives the packet, if finding that the destination is itself, the SFF1 parses the routing header in the packet, further parses the information of the service forwarding path and the Service Index to learn about that the current node is a first hop, further acquires the IPv6 address of a second-hop node SF2, replaces the destination address in the IPv6 header with the address, and subtracts 1 from the Service Index field to obtain 3; meanwhile, the metadata related information in the packet is parsed to judge whether there is metadata information needed by the node SFF1 or not, and if YES, the metadata information is read and used, and after use, the metadata information is updated as needed; if NO, the metadata information is not updated; the SFF1 looks up the IPv6 routing table for forwarding according to the destination SF2-IPv6 address; and it may also be found that tunnel encapsulation or MPLS forwarding is required for arrival at the destination IPv6 address.

In Step 5, after SF2 receives the packet, if finding that the destination is itself, the SF2 parses the routing header in the packet, further parses the information of the service forwarding path and the Service Index to learn about that the current node is a second hop, further acquires the IPv6 address of a third-hop node SFF3, replaces the destination address in the IPv6 header with the address, and subtracts 1 from the Service Index field to obtain 2; meanwhile, the metadata information in the packet is parsed to judge whether there is metadata information needed by the node SF2 or not; if YES, the metadata information is read and used, and after use, the metadata information is updated as needed; if NO, the metadata information is not updated; the SF2 looks up the IPv6 routing table for forwarding according to the destination SFF3-IPv6 address; and it may also be found that tunnel encapsulation or MPLS forwarding is required for arrival at the destination IPv6 address.

In Step 6, after SFF3 receives the packet, if finding that the destination is itself, the SFF3 parses the routing header in the packet, further parses the information of the service forwarding path and the Service Index to learn about that the current node is a third hop, further acquires the IPv6 address of a fourth-hop node SF5, replaces the destination address in the IPv6 header with the address, and subtracts 1 from the Service Index field to obtain 1; meanwhile, the metadata information in the packet is parsed to judge whether there is metadata information needed by the node SFF3 or not; if YES, the metadata information is read and used, and after use, the metadata information is updated as needed; if NO, the metadata information is not updated; the SFF3 looks up the IPv6 routing table for forwarding according to the destination SF5-IPv6 address; and it may also be found that tunnel encapsulation or MPLS forwarding is required for arrival at the destination address.

In Step 7, after SF5 receives the packet, if finding that the destination is itself, the SF5 parses the routing header in the packet, further parses the information of the service forwarding path and the Service Index to learn about that the current node is a fourth hop, further acquires the IPv6 address of a fifth-hop node Destination, replaces the destination address in the IPv6 header with the address, and subtracts 1 from the Service Index field to obtain 0; meanwhile, the metadata information in the packet is parsed to judge whether there is metadata information needed by the node SF5 or not; if YES, the metadata information is read and used, and after use, the metadata information is updated as needed; if NO, the metadata information is not updated; the SF5 finds that the Service Index field is 0, and strips the routing header containing the SFP related information and the destination routing header containing the metadata related information; then, the SF5 looks up the IPv6 routing table for forwarding according to the destination Destination-IPv6 address; and it may also be found that tunnel encapsulation or MPLS forwarding is required for arrival at the destination IPv6 address.

### Example 4

As shown in FIG. 3-11, a packet goes through intermediate nodes classifier/SFF1/SF2/SFF3/SF5 when being sent from a source S to a destination D, and all the intermediate nodes have globally reachable IPv6 address IDs, and correspond to IPv6 addresses classifier-IPv6/SFF1-IPv6/SF2-IPv6/SFF3-IPv6/SF5-IPv6 respectively. The classifier is an inevitable node for the source node S to access the destination node D, or is a first-hop routing forwarding device; at this moment, the node performing routing header encapsulation is the intermediate node classifier; and moreover, when the packet arrives at the SFF3, it is found that traffic on the SF5 is almost saturated, and then another next-hop SF, i.e., SF4 is selected. A forwarding flow of the packet is as follows.

In Step 1, the source node Source looks up an IPv6 routing table according to a destination address Destination, and finally forwards the packet to the inevitable node Classifier.

In Step 2, the node Classifier acquires information [SFF1, SF2, SFF3, SF5, Destination] about a service forwarding path to the destination node Destination and the corresponding global IPv6 addresses, totally 5 hops, and meanwhile, acquires metadata related information to be transmitted and shared on the service forwarding path. The path information and the metadata related information may be locally configured, and may also be acquired from a controller.

In Step 3, the node Classifier acquires information of a first-hop node, encapsulates it in a destination address field of an IPv6 header, encapsulates the IPv6 addresses corresponding to the information [SFF1, SF2, SFF3, SF5, Destination] about the service forwarding path in a routing header newly extended in the embodiment of the disclosure, of which a packet format is shown in FIG. 18, subtracts 1 from the Service Index field to obtain 4, and meanwhile, encapsulates the acquired metadata related information in an IPv6 destination options header.

In Step 4, the node Classifier performs forwarding to the first-hop node SFF1 according to a destination IPv6 address in the IPv6 header. Of course, when looking up an IPv6 routing forwarding table, the node Classifier may find that tunnel encapsulation or MPLS forwarding is required for arrival at the destination IPv6 address.

Step 5 is the same as Step 4 in example 3.

FIG. 6 is the same as Step 5 in example 3.

In Step 7, after SFF3 receives the packet, if finding that the destination is itself, the SFF3 parses the routing header in the packet, if finding that the next hop is the SF5 and meanwhile, finding that the traffic on the SF5 is almost saturated by various means, reselects the next-hop SF as the SF4, updates the destination address in the IPv6 header to be SF4-IPv6, and subtracts 1 from the Service Index field to obtain 1; at this moment, the SFF3 may select to update an SFP address list, or may select not to update it; meanwhile, the metadata related information in the packet is parsed to judge whether there is metadata information needed by the node SFF3 or not; if YES, the metadata information is read and used, and after use, the metadata information is updated as needed; if NO, the metadata information is not updated; the SFF3 looks up the IPv6 routing table for forwarding according to the destination SF4-IPv6 address; and it may also be found that tunnel encapsulation or MPLS forwarding is required for arrival at the destination IPv6 address.

In Step 8, after SF4 receives the packet, if finding that the destination is itself, the SF4 parses the routing header in the packet, further parses the information of the service forwarding path and the Service Index to learn about that the current node is a fourth hop, further acquires the IPv6 address of a fifth-hop node Destination, replaces the destination address in the IPv6 header with the address, and subtracts 1 from the Service Index field to obtain 0; meanwhile, the metadata information in the packet is parsed to judge whether there is metadata information needed by the node SF4 or not; if YES, the metadata information is read and used, and after use, the metadata information is updated as needed; if NO, the metadata information is not updated; furthermore, the SF4 finds that the Service Index field is 0, and strips the routing header containing the SFP related information and the destination routing header containing the metadata related information; then, the SF4 looks up the IPv6 routing table for forwarding according to the destination Destination-IPv6 address; and it may also be found that tunnel encapsulation or MPLS forwarding is required for arrival at the destination IPv6 address.

### Example 5

As shown in FIG. 3-12, a packet goes through intermediate nodes SFF1/SF2/SFF3/SF5 when being sent from a source S to a destination D, and all the intermediate nodes have corresponding SIDs (Segment IDs/SIDs), and correspond to IDs SFF1-SID/SF2-SID/SFF3-SID/SF5-SID respectively, wherein SFF1-SID and SFF3-SID are node SIDs, and SF2-SID and SF5-SID are service SIDs. A forwarding flow of the packet is as follows.

In Step 1, the source node Source acquires information [SFF1, SF2, SFF3, SF5, Destination] about a service forwarding path to the destination node Destination and the corresponding SIDs, totally 5 hops, and meanwhile, does not acquire metadata related information corresponding to the service forwarding path. The path information and the metadata related information may be locally configured, or may be acquired from a controller, and here, the source node plays a role in encapsulating a routing header.

In Step 2, the source node acquires information of a first-hop node, i.e. SFF1-SID information, further parses the SFF1-SID information as a routable IPv6 address, encapsulates the address in a destination address field of an IPv6 header, encapsulates the SIDs corresponding to the information [SFF1, SF2, SFF3, SF5, Destination] about the service forwarding path in a routing header defined in the embodiment of the disclosure in an inverted sequence, that is, a packet format is shown in FIG. 3-13, and subtracts 1 subtracted from the Service Index field to obtain 4.

In Step 3, the source node performs forwarding to to the first-hop node SFF1 according to a destination IPv6 address in the IPv6 header. Of course, when looking up an IPv6 routing forwarding table, the source node may find that tunnel encapsulation or MPLS forwarding is required for arrival at the destination IPv6 address, or may find that VLAN encapsulation, VXLAN encapsulation, tunnel encapsulation or MPLS forwarding is required for arrival at the destination IPv6 address.

In Step 4, after receiving the packet, if finding that the destination is itself, the SFF1 parses the routing header in the packet, further parses corresponding SF2-SID information, if finding that it is a local service SID, parses it as a routable IPv6 address on the SFF1, replaces the destination address in the IPv6 header with the address, and subtracts 1 from the Service Index field to obtain 3; the SFF1 looks up the IPv6 routing table for forwarding according to the parsed IPv6 address of the SF2-SID; and it may also be found that VLAN encapsulation, VXLAN encapsulation, tunnel encapsulation or MPLS forwarding is required for arrival at the SF2-SID.

In Step 5, after SF2 receives the packet, if finding that the destination is itself, the SF2 parses the routing header in the packet, further parses corresponding SFF3-SID information as a routable IPv6 address, replaces the destination address in the IPv6 header with the address, and subtracts 1 from the Service Index field to obtain 2; the SF2 looks up the IPv6 routing table for forwarding according to the parsed IPv6 address of the SFF3-SID; and it may also be found that VLAN encapsulation, VXLAN encapsulation, tunnel encapsulation or MPLS forwarding is required for arrival at the destination IPv6 address.

In Step 6, after SFF3 receives the packet, if finding that the destination is itself the SFF3 parses the routing header in the packet, further parses corresponding SF5-SID information, if finding that it is a local service SID, parses the SF5-SID information as a routable IPv6 address on the SFF3, replaces the destination address in the IPv6 header with the address, and subtracts 1 from the Service Index field to obtain 3; the SFF3 looks up the IPv6 routing table for forwarding according to the parsed IPv6 address of the SF5-SID; and it may also be found that VLAN encapsulation, VXLAN encapsulation, tunnel encapsulation or MPLS forwarding is required for arrival at the SF5-SID.

In Step 7, after SF5 receives the packet, if finding that the destination is itself, the SF5 parses the routing header in the packet, further parses corresponding Destination-SID information, parses the Destination-SID information as a routable IPv6 address, replaces the destination address in the IPv6 header with the address, and subtracts 1 from the Service Index field to obtain 0; the SF5 finds that the Service Index field is 0, and strips the routing header; then, the SF5 looks up the IPv6 routing table for forwarding according to the destination Destination-IPv6 address; and it may also be found that VLAN encapsulation, VXLAN encapsulation, tunnel encapsulation or MPLS forwarding is required for arrival at the destination IPv6 address.

### Example 6

As shown in FIG. 3-14, a packet is sent from a source S to a destination D, a service forwarding path is Classier/SFF1/SF2/SFF3/SF5, and the destination D is not in an IPv6 SFC domain; when the packet is sent from the source S to the destination D, the packet received by the destination node Destination contains unrecognized metadata option information; and at this moment, the Destination needs to further process the received packet according to identifers defined in Chapter REC 2460 4.2.

When highest two bits in an MD Option Type field of a metadata option are 00, the option is ignored;
when the highest two bits in the MD Option Type field of the metadata option are 01, the packet is discarded;
when the highest two bits in the MD Option Type field of the metadata option are 10, the packet is discarded, and no matter whether a destination address of the packet is a multicast address or not, an Internet Control Packet Protocol (ICMP) parameter error packet is sent to the source node to indicate that there is an unrecognized option type; and
when the highest two bits in the MD Option Type field of the metadata option are 11, the packet is discarded, and only when the destination address of the packet is not a multicast address, the ICMP parameter error packet is sent to the source node to indicate that there is an unrecognized option type.

According to the methods and devices provided by the abovementioned embodiments for implementing the SFC, the SFC information is encapsulated in the IPv6 header of the IPv6 and the IPv6 packet is forwarded along the SFC, so that the SFC technology may be simply deployed and rapidly implemented in an IPv6 network.

Those skilled in the art should know that all or part of the steps of the abovementioned embodiments may be implemented by virtue of a flow of a computer program, the computer program may be stored in a computer-readable storage medium, the computer program is executed on a corresponding hardware platform (for example, a system, equipment, a device and an apparatus), and during execution, one or combination of the steps of the method embodiments is included.

Alternatively, all or part of the steps of the abovementioned embodiments may also be implemented by virtue of an integrated circuit, these steps may form multiple integrated circuit modules respectively, or multiple modules or steps therein form a single integrated circuit module for implementation.

The devices/function modules/function units in the abovementioned embodiments may be implemented by adopting a universal computing device, and they may be concentrated on a single computing device, and may also be distributed on a network formed by multiple computing devices.

When being implemented in form of software function module and sold or used as independent products, the devices/function modules/function units in the abovementioned embodiments may be stored in a computer-readable storage medium. The abovementioned computer-readable storage medium may be a read-only memory, a magnetic disk, an optical disk or the like.

### INDUSTRIAL APPLICABILITY

Disclosed are a method and apparatus for implementing a service function chain. The method is applied to a node on a service function chain. The method comprises: packaging service function chain information in an IPv6 extension header of an IPv6 message; transmitting the IPv6 message according to the service function chain information; after the IPv6 message carrying the service function chain information is received, parsing the service function chain information; and acquiring an IPv6 address of a next hop node on a service function path as a destination address, and transmitting the IPv6 message to the destination address.

## Claims

1. A method for implementing a Service Function Chain, SFC, applied to a node on the SFC, the method comprising:
encapsulating SFC information in an Internet Protocol version 6, IPv6, header of an IPv6 packet; and
sending the IPv6 packet according to the SFC information.

2. The method according to claim 1, wherein the SFC information comprises at least one of the following: service forwarding path information or metadata information.

3. The method according to claim 2, wherein the IPv6 header arranged to encapsulate the service forwarding path information is an IPv6 routing header, or a newly defined IPv6 header.

4. The method according to claim 3, wherein the service forwarding path information comprises:
Service Function Path, SFP, information and a service index,
wherein the service index is arranged to identify position information of the current node in an SFP.

5. The method according to claim 2, wherein the IPv6 header arranged to encapsulate the metadata information is an IPv6 destination options header, or a newly defined IPv6 header.

6. The method according to any one of claims 2-5, wherein sending the IPv6 packet according to the SFC information comprises:
determining an IPv6 address of a next-hop node according to the acquired service forwarding path information,
determining the IPv6 address of the next-hop node as a destination address, and
sending the IPv6 packet to the destination address.

7. The method according to any one of claims 1-5, wherein before encapsulating the SFC information in the IPv6 header of the IPv6 packet, the method further comprises: classifying traffic,
wherein encapsulating the SFC information in the IPv6 header of the IPv6 packet comprises: encapsulating the SFC information in the IPv6 header of the IPv6 packet according to a result of the classification.

8. The method according to any one of claims 1-5, wherein before encapsulating the SFC information in the IPv6 header of the IPv6 packet, the method further comprises:
acquiring the SFC information.

9. The method according to claim 8, wherein the SFC information is acquired in at least one of the following manners:
acquiring the SFC information from local configuration information, or acquiring the SFC information from global configuration information issued by a controller.

10. The method according to any one of claims 4-5, wherein the SFP information comprises any one of: a Service Function Path Identifier, SFPID, an address list of nodes on the SFP, an Segment Identifier, SID, list of the nodes on the SFP or a node ID list of the nodes on the SFP.

11. A method for implementing a Service Function Chain, SFC, applied to a node on the SFC, the method comprising:
after receiving an Internet Protocol version 6, IPv6, packet containing SFC information, parsing the SFC information; and
acquiring an IPv6 address of a next-hop node of a Service Function Path, SFP, as a destination address, and sending the IPv6 packet to the destination address.

12. The method according to claim 11, wherein the SFC information comprises at least one of the following: service forwarding path information or metadata information.

13. The method according to claim 12, wherein the service forwarding path information is encapsulated in an IPv6 routing header of the IPv6 packet, or is encapsulated in a newly defined IPv6 header of the IPv6 packet; and
the metadata information is encapsulated in an IPv6 destination options header of the IPv6 packet, or is encapsulated in a newly defined IPv6 header of the IPv6 packet.

14. The method according to claim 13, wherein sending the IPv6 packet to the destination address comprises:
when a next hop of the current node is a destination node of the SFP, stripping the IPv6 header encapsulated with the SFC information from the IPv6 packet, and then sending the IPv6 packet to the destination address.

15. The method according to claim 11 or 12 or 13, wherein sending the IPv6 packet to the destination address comprises:
when a next hop of the current node is not a destination node of the SFP, determining whether to update the SFC information contained in the IPv6 packet or not according to a deployment strategy, and then sending the IPv6 packet to the destination address.

16. The method according to claim 15, wherein determining whether to update the SFC information contained in the IPv6 packet or not according to the deployment strategy and then sending the IPv6 packet to the destination address comprises:
when the service forwarding path information contained in the IPv6 packet is updated according to the deployment strategy, parsing the updated service forwarding path information, acquiring the IPv6 address of the next-hop node of the updated SFP as the destination address, and sending the IPv6 packet to the destination address.

17. The method according to claim 12 or 13, wherein the service forwarding path information comprises: SFP information and a service index,
wherein the service index is arranged to identify position information of the current node in the SFP.

18. The method according to claim 17, wherein sending the IPv6 packet to the destination address comprises:
when a next hop of the current node is not a destination node of the SFP and the SFC information comprises the service forwarding path information, updating the service index in the IPv6 packet, and then sending the IPv6 packet to the destination address.

19. The method according to claim 18, wherein updating the service index in the IPv6 packet comprises:
when the service index represents information of a number of hops between the current node and the destination node of the SFP, progressively decreasing the service index in the IPv6 packet.

20. A device for implementing a Service Function Chain, SFC, applied to a node on the SFC and comprising:
an encapsulation module, arranged to encapsulate SFC information in an Internet Protocol version 6, IPv6, header of an IPv6 packet; and
a sending module, arranged to send the IPv6 packet according to the SFC information.

21. A device for implementing a Service Function Chain, SFC, applied to a node on the SFC and comprising:
a packet receiving module, arranged to receive an Internet Protocol version 6, IPv6, packet containing SFC information, and then parse the SFC information; and
a packet sending module, arranged to acquire an IPv6 address of a next-hop node of a Service Function Path, SFP, as a destination address, and send the IPv6 packet to the destination address.

22. A computer-readable storage medium, storing computer executable instructions, the computer executable instructions being arranged to execute the method according to any one of claims 1-19.
